# FASCICULE DE BREVET EUROPEEN

(11) **EP 2 670 585 B1**
(45) Date de publication et mention de la délivrance du brevet: **22.04.2015**
(21) Numéro de dépôt: 12703038.5
(22) Date de dépôt: 31.01.2012
(51) Int. Cl.: B29D 30/38, B60C 9/00, D02G 3/48, D07B 1/06

(54) **RENFORT COMPOSITE GAINE D'UNE COUCHE DE POLYMERE AUTO-ADHERENTE AU CAOUTCHOUC**
ZUSAMMENGESETZTER VERSTÄRKER UMHÜLLT MIT EINER SCHICHT AUS POLYMER MIT SELBSTHAFTUNG AN KAUTSCHUK
COMPOSITE REINFORCER SHEATHED WITH A LAYER OF POLYMER THAT IS SELF-ADHESIVE TO RUBBER

(30) Priorité: 03.02.2011 FR 1150858
(43) Date de publication de la demande: 11.12.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); RIGO, Sébastien, F-63040 Clermont-Ferrand Cedex 9 (FR); CUSTODERO, Emmanuel, F-63040 Clermont-Ferrand Cedex 9 (FR)
(74) Mandataire: Desbordes, Guillaume
(86) Numéro de dépôt international: PCT/EP2012/051518
(87) Numéro de publication internationale: WO 2012/104281

(56) Documents cités:
- FR-A1- 2 945 826
- JP-A- 2004 211 261
- JP-A- 2009 301 777

## Description

### DOMAINE DE L'INVENTION

Le domaine de la présente invention est celui des éléments de renforcement ou « renforts », notamment métalliques, utilisables pour renforcer des articles ou produits semi-finis en caoutchouc diène tels que par exemple des bandages pneumatiques.

La présente invention est plus particulièrement relative à des renforts de type hybride ou composite constitués d'au moins une âme, en particulier métallique, ladite âme étant recouverte ou gainée d'une couche ou gaine de matière thermoplastique.

### ETAT DE LA TECHNIQUE

Le gainage de renforts métalliques par des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

La demande de brevet EP 0 962 562 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques utilisables comme tringle dans un bourrelet de bandage pneumatique, ces fils ou câbles étant doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) ainsi que le résorcinol qu'il est souhaitable de supprimer à terme des compositions adhésives, en raison de l'évolution récente de la réglementation européenne sur ce type de produits.

Ainsi, les concepteurs d'articles en caoutchouc diénique, notamment les manufacturiers de bandages pneumatiques sont à la recherche aujourd'hui de nouveaux systèmes adhésifs ou de nouveaux renforts qui permettent de pallier tout ou partie des inconvénients précités.

Les demandes WO 2010/105975 et WO 2010/136389, récemment publiées, divulguent des renforts composites, notamment à âme métallique, du type auto-adhérents qui répondent à l'objectif ci-dessus.

Ces renforts composites, présentant des niveaux d'adhésion au caoutchouc qui concurrencent largement ceux atteints avec les colles RFL traditionnelles, ont toutefois comme inconvénient que leur procédé de fabrication passe par deux étapes successives de gainage ou recouvrement, nécessitant tout d'abord le dépôt d'une première couche de polymère thermoplastique tel que polyamide, ensuite le dépôt d'une deuxième couche d'élastomère thermoplastique insaturé, les deux dépôts, conduits à des températures différentes, étant en outre séparés par une étape de refroidissement à l'eau (pour solidification de la première couche) puis de séchage intermédiaires.

Ces manipulations successives sont quelque peu pénalisantes du point de vue industriel et antinomiques de la recherche de cadences de fabrication élevée.

Par ailleurs, on connait un renfort composite du document JP 2009 30177.

### BREVE DESCRIPTION DE L'INVENTION

Poursuivant leurs recherches, les Demanderesses ont découvert un renfort composite nouveau du type auto-adhérent, qui permet lui aussi d'atteindre d'excellents niveaux d'adhésion comparativement à l'emploi de colles RFL, tout en offrant un procédé de fabrication simplifié, comparativement aux procédés décrits dans les demandes WO 2010/105975 et WO 2010/136389 précitées, puisque ne nécessitant qu'une seule opération de gainage.

En conséquence, un premier objet de l'invention concerne un renfort composite comportant :
- un ou plusieurs fil(s) de renforcement ;
- recouvrant ledit fil, individuellement chaque fil ou collectivement plusieurs fils, une couche d'une composition polymère thermoplastique comportant au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

On a constaté de manière inattendue que la présence de cette composition polymère thermoplastique spécifique permettait d'assurer une adhésion directe et performante du renfort composite de l'invention à une matrice ou composition d'élastomère diénique telle que celles couramment utilisées dans des bandages pneumatiques, en particulier à température élevée.

L'invention concerne également un procédé de fabrication du renfort composite ci-dessus, ledit procédé étant caractérisé en ce qu'on gaine individuellement le fil ou chaque fil de renforcement, ou collectivement plusieurs fils de renforcement, avec une couche de composition polymère thermoplastique comportant un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

La présente invention concerne également l'utilisation du renfort composite de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article ou produit semi-fini en caoutchouc, en particulier bandage pneumatique, comportant un renfort composite selon l'invention.

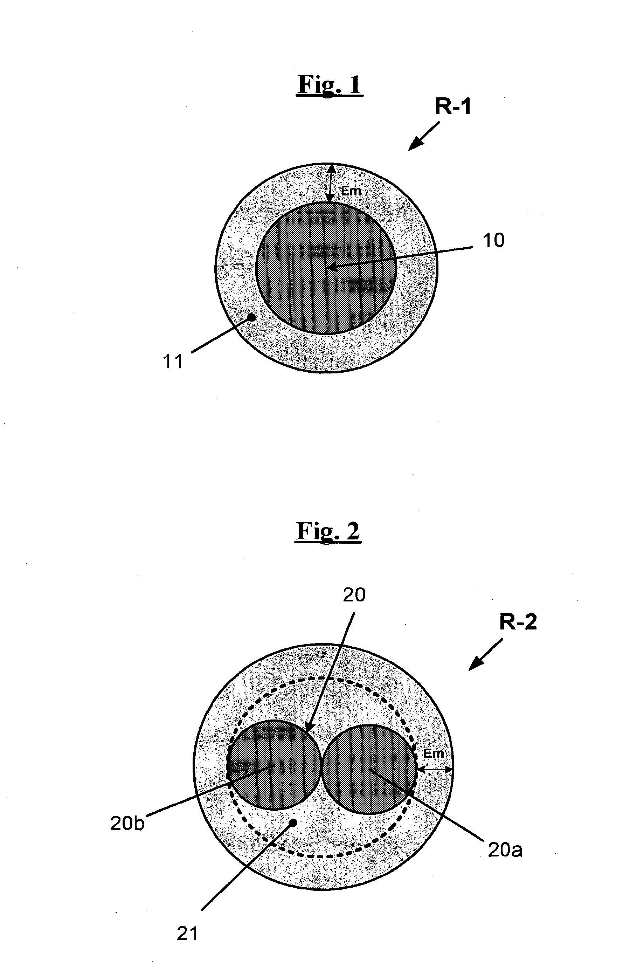

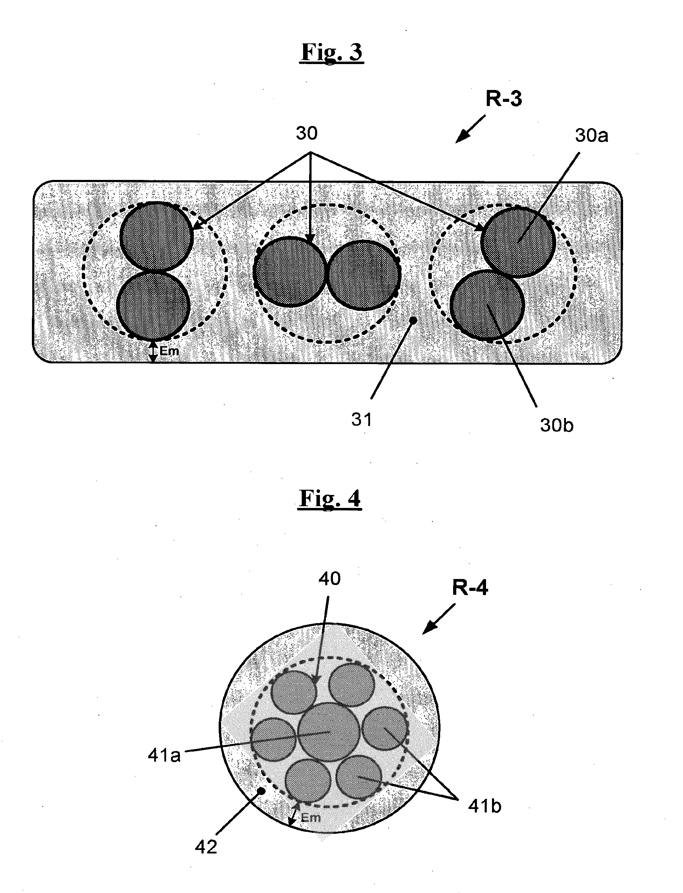

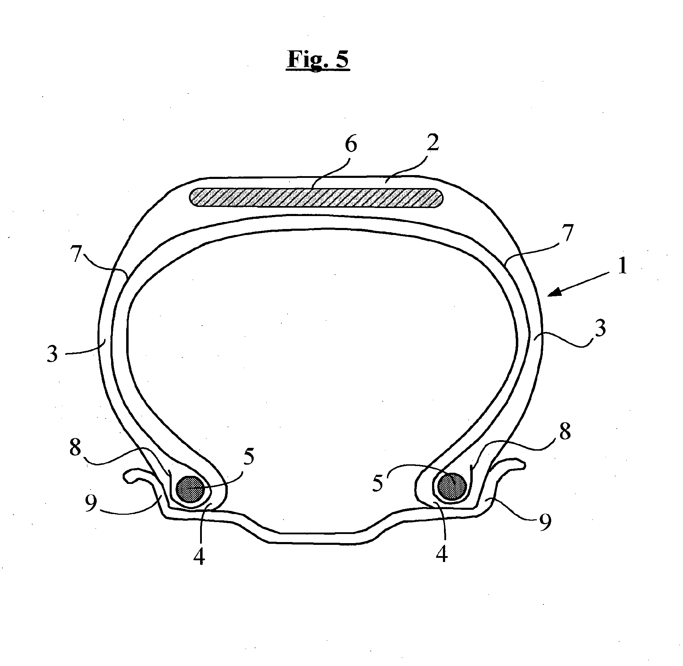

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un bandage pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement par cuisson à une composition de caoutchouc insaturé, et utilisable notamment pour le renforcement d'articles en caoutchouc diène tels que des bandages pneumatiques, a donc comme caractéristiques essentielles de comporter :
- au moins un fil (c'est-à-dire un ou plusieurs fils) de renforcement ;
- recouvrant individuellement ledit fil, chaque fil ou collectivement plusieurs fils, une couche d'une composition polymère thermoplastique comportant un polymère thermoplastique dont la température de transition vitreuse (notée ci-après T_{g1}) est positive (c'est-à-dire supérieure à 0°C), un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

En d'autres termes, le renfort composite de l'invention comporte un seul fil ou plusieurs fils de renforcement, ledit fil, individuellement chaque fil ou collectivement plusieurs fils étant recouvert(s) par une couche (monocouche) ou gaine de la composition polymère thermoplastique énoncée ci-dessus. La structure du renfort de l'invention est décrite en détail ci-après.

Dans la présente demande, on entend de manière générale par fil de renforcement ("*reinforcing thread"*) tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut d'agir par exemple d'un monofilament élémentaire de diamètre important (par exemple et de préférence égal ou supérieur à 50 µm), d'un ruban élémentaire, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, un groupe, une rangée de fils tels que par exemple une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type "*steel cords*" pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour *"Normal Tensile* "), à haute résistance (dit "HT" pour *" High Tensile* "), à très haute résistance (dit "SHT" pour *" Super High Tensile* ") comme à ultra-haute résistance (dit "UHT" pour *"Ultra High Tensile* ").

L'acier pourrait être revêtu d'une couche adhésive telle que du laiton ou du zinc. Toutefois, on peut avantageusement utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La composition de polymère thermoplastique constituant la couche ou gaine ci-dessus comporte tout d'abord un polymère thermoplastique dont la Tg (notée T_{g1}) est par définition positive, de préférence supérieure à +20°C, plus préférentiellement supérieure à +30°C. D'autre part, la température de fusion (notée Tf) de ce polymère thermoplastique est préférentiellement supérieure à 100°C, plus préférentiellement supérieure à 150°C, notamment supérieure à 200°C.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6 ou un polyamide 11.

Le deuxième constituant essentiel de la composition de polymère thermoplastique est un élastomère thermoplastique styrénique insaturé fonctionnalisé, ledit élastomère étant porteur de groupes ou fonctions époxyde, carboxyle, anhydride d'acide ou ester d'acide.

Préférentiellement, les groupes fonctionnels sont des groupes époxydes, c'est-à-dire que l'élastomère thermoplastique est un élastomère époxydé.

La Tg (T_{g2} ou première Tg ou Tg la plus basse) dudit élastomère est par définition négative, de préférence inférieure à - 20°C, plus préférentiellement inférieure à - 30°C. Ainsi et selon un mode de réalisation préférentiel de l'invention, l'écart de températures de transition vitreuse (T_{g1} - T_{g2}) entre le polymère thermoplastique et l'élastomère TPS insaturé est supérieur à 40°C, plus préférentiellement supérieur à 60°C.

On rappellera ici que les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène).

C'est la raison pour laquelle, de manière connue, les copolymères TPS se caractérisent généralement par la présence de deux pics de transition vitreuse, le premier pic (température la plus basse, négative, correspondant à T_{g2}) étant relatif à la séquence élastomère du copolymère TPS, le second pic (température la plus haute, positive, typiquement aux alentours de 80°C ou plus) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène). En cela, bien entendu, ils ne doivent pas être confondus avec des élastomères copolymères diéniques statistiques tels que par exemple des caoutchoucs SIR (copolymères styrène-isoprène) ou SBR (copolymères styrène-butadiène) qui de manière bien connue n'ont aucun caractère thermoplastique.

Ceci étant rappelé, une caractéristique essentielle de l'élastomère TPS utilisé dans le renfort composite de l'invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

Une deuxième caractéristique essentielle de l'élastomère TPS utilisé dans le renfort composite de l'invention est qu'il est fonctionnalisé, porteur de groupes fonctionnels choisis parmi les groupes ou fonctions époxyde, carboxyle, anhydride ou ester d'acide. Selon un mode de réalisation particulièrement préférentiel, cet élastomère TPS est un élastomère époxydé, c'est-à-dire porteur d'un ou plusieurs groupes époxydes.

De préférence, l'élastomère insaturé est un copolymère comportant comme unités de base des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères ; plus particulièrement, il s'agit d'un SBS ou SIS, notamment d'un SBS.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part de la couche du polymère thermoplastique, d'autre part de l'élastomère diénique auquel est destiné le renfort d'autre part. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000.

Des élastomères TPS insaturés et époxydés, tels que par exemple SBS, sont connus et disponibles commercialement, par exemple auprès de la société Daicel sous la dénomination "Epofriend".

La composition de polymère thermoplastique a pour autre caractéristique essentielle de comporter, en combinaison avec le polymère thermoplastique et l'élastomère TPS insaturé fonctionnalisé précédemment décrits, au moins un polymère de poly(p-phénylène éther) (ou poly(1,4-phénylène-éther)) (noté en abrégé "PPE").

Les polymères thermoplastiques PPE sont bien connus de l'homme du métier, ce sont des résines solides à température ambiante (20°C). Préférentiellement, le PPE utilisé ici possède une température de transition vitreuse (notée ci-après Tg₃) qui est supérieure à 150°C, plus préférentiellement supérieure à 180°C. Quant à sa masse moléculaire moyenne en nombre (Mn), elle est préférentiellement comprise entre 5 000 et 100 000 g/mol.

A titres d'exemples non limitatifs de polymères PPE utilisables dans le renfort composite de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

De préférence, dans la composition de polymère thermoplastique du renfort composite de l'invention, la quantité de polymère PPE est ajustée de telle manière que le taux pondéral de PPE soit compris entre 0,05 et 5 fois, plus préférentiellement entre 0,1 et 2 fois le taux pondéral de styrène présent dans l'élastomère TPS fonctionnalisé lui-même. En dessous des minima préconisés, l'adhésion du renfort composite au caoutchouc peut être diminuée alors qu'au-delà des maxima indiqués, il existe un risque de fragilité de la couche.

Pour toutes ces raisons, le taux pondéral de PPE est plus préférentiellement encore compris entre 0,2 et 1,5 fois le taux pondéral de styrène dans l'élastomère TPS.

La Tg des polymères thermoplastiques ci-dessus (T_{g1}, T_{g2} et T_{g3}) est mesurée de manière connue par DSC (*Differential Scanning Calorimetry*), par exemple et sauf indications différentes spécifiées dans la présente demande, selon la norme ASTM D3418 de 1999.

La masse moléculaire moyenne en nombre (Mn) est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Bien que les trois constituants décrits ci-dessus (polymère thermoplastique, élastomère TPS insaturé fonctionnalisé et PPE) soient suffisants à eux seuls pour conférer au renfort composite de l'invention de très hautes propriétés d'adhésion à un caoutchouc insaturé tel que du caoutchouc naturel, certains additifs conventionnels tels que colorant, charge, plastifiant, tackifiant, antioxydant ou autre stabilisant, système de réticulation ou vulcanisation tel que soufre et accélérateur, pourraient être éventuellement ajoutés à la composition polymère thermoplastique précédemment décrite.

La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une couche (11) comportant un polymère thermoplastique dont la Tg (Tg₁) est positive, par exemple en polyamide ou en polyester, un PPE tel que PPO et un élastomère TPS insaturé fonctionnalisé, par exemple SB, SBS, SBBS, SIS ou SBIS du type époxydé, dont la Tg (Tg₂) est négative ; l'épaisseur minimale de cette couche est notée Eₘ sur cette figure 1.

La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou monofilaments (20a, 20b) de diamètre relativement élevé (par exemple entre 0,10 et 0,50 mm) retordus ou câblés ensemble, par exemple en acier au carbone ; le fil de renforcement (20) est recouvert d'une couche (21) d'épaisseur minimale Eₘ, comportant un polymère thermoplastique dont la Tg (Tg₁) est positive, par exemple en polyamide ou en polyester, un PPE tel que PPO et un élastomère TPS insaturé fonctionnalisé, par exemple d'un SBS ou SIS époxydé, par exemple SB, SBS, SBBS, SIS ou SBIS, dont la Tg (Tg₂) est négative.

La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une couche (31) comportant un polymère thermoplastique dont la Tg (Tg₁) est positive, par exemple en polyamide ou en polyester, un PPE tel que PPO et un élastomère TPS insaturé fonctionnalisé, par exemple SB, SBS, SBBS, SIS ou SBIS du type époxydé, dont la Tg (Tg₂) est négative.

La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une couche (42) d'une composition de polymère comportant un polyamide, un PPE tel que PPO et un élastomère SBS fonctionnalisé, par exemple époxydé.

Dans les renforts composites conformes à l'invention tels que ceux schématisés par exemple dans les figures 1 à 4 ci-dessus, l'épaisseur minimale Eₘ de la gaine entourant le fil ou les fils de renforcement peut varier dans une très large mesure en fonction des conditions particulières de réalisation de l'invention. Elle est de préférence comprise entre 1 µm et 2 mm, plus préférentiellement entre 10 µm et 1 mm.

Dans le cas où plusieurs fils de renforcement (notamment plusieurs câbles) sont utilisés, la couche ou gaine d'enrobage peut être déposée individuellement sur chacun des fils de renforcement (notamment sur chacun des câbles) (pour rappel, que ces fils de renforcement soit unitaires ou pas), comme illustré par exemple aux figures 1, 2 et 4 commentées précédemment, ou bien déposée collectivement sur plusieurs des fils de renforcement (notamment sur plusieurs des câbles) disposés de manière appropriée, par exemple alignés selon une direction principale, comme illustré par exemple à la figure 3.

Le renfort composite de l'invention est préparé selon un procédé spécifique comportant au moins l'étape selon laquelle on soumet au moins un (c'est-à-dire un ou plusieurs) fil de renforcement à une opération de gainage, préférentiellement par passage à travers une tête d'extrusion, par la couche de composition polymère thermoplastique précédemment décrite comportant le polymère thermoplastique dont la Tg (Tg₁) est positive, l'élastomère thermoplastique styrénique insaturé fonctionnalisé dont la Tg (Tg₂) est négative, et le PPE dont la Tg (Tg₃) est préférentiellement supérieure à 150°C.

L'étape de gainage ci-dessus est conduite de manière connue de l'homme du métier, en ligne et en continu ; elle consiste par exemple simplement à faire passer le fil de renforcement, à travers des filières de diamètre adapté, dans une tête d'extrusion chauffée à une température appropriée.

Selon un mode de réalisation préférentiel, le ou les fils de renforcement sont préalablement chauffés, par exemple par induction ou par rayonnement IR, avant passage dans la tête d'extrusion. En sortie de la tête d'extrusion, le ou les fils de renforcement ainsi gainés sont ensuite refroidis suffisamment de manière à solidifier la couche de polymère, par exemple avec de l'air ou un autre gaz froid, ou par passage dans un bain d'eau suivi d'une étape de séchage.

Le renfort composite conforme à l'invention ainsi obtenu peut subir optionnellement un traitement thermique, directement en sortie d'extrusion ou ultérieurement après refroidissement.

A titre d'exemple, pour l'obtention d'un fil de renforcement gainé ayant un diamètre total d'environ 1 mm, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une couche d'une composition de polyamide, d'élastomère TPS fonctionnalisé et de PPE, d'épaisseur maximale égale à environ 0,4 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 230°C. Le mélange de polyamide, TPS fonctionnalisé et PPE, fondu à une température de 210°C dans l'extrudeuse, recouvre ainsi le câble, par le biais de la tête de gainage, à une vitesse de défilement du fil typiquement égale à plusieurs dizaines de m/min, pour un débit de pompe d'extrusion typiquement de plusieurs dizaines de g/min. Le mélange de polyamide, TPS fonctionnalisé et PPE peut être réalisé in situ, dans la même tête d'extrusion, les trois composants étant alors apportés par exemple par trois trémies d'alimentation différentes ; selon un autre exemple de réalisation possible, polyamide, TPS et PPE peuvent être également utilisés sous forme d'un mélange préalablement fabriqué, par exemple sous forme de granules, une seule trémie d'alimentation étant alors suffisante. En sortie de ce gainage, le câble peut être immergé dans un bac rempli d'eau froide, pour refroidissement avant passage de la bobine de réception à l'étuve pour séchage.

Pour l'étape de gainage décrite ci-dessus, le câble (fil de renforcement) est avantageusement préchauffé avant passage dans la tête d'extrusion, par exemple par passage à travers un générateur HF ou à travers un tunnel chauffant.

A l'issue de cette opération de gainage, par exemple directement en sortie de la tête de gainage, le renfort composite peut traverser par exemple un four-tunnel, par exemple de plusieurs mètres de long, pour y subir un traitement thermique sous air. Cette température de traitement est par exemple comprise entre 150°C et 300°C, pour des durées de traitement de quelques secondes à quelques minutes selon les cas (par exemple entre 10 s et 10 min), étant entendu que la durée du traitement sera d'autant plus courte que la température sera élevée, et que le traitement thermique ne doit évidemment pas conduire à une refusion ou même un ramollissement excessif des matières thermoplastiques utilisées. Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster, le cas échéant, la température et la durée du traitement thermique optionnel ci-dessus, en fonction des conditions particulières de mise en oeuvre de l'invention, notamment de la nature exacte du renfort composite fabriqué, en particulier selon que l'on traite des monofilaments pris individuellement, des câbles constitués de plusieurs monofilaments ou des groupes de tels monofilaments ou câbles tels que des bandelettes. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle du renfort, pour renforcer encore la propre cohésion de sa gaine, notamment dans les cas où ce renfort composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (par exemple huile de lin) dans la composition de polymère thermoplastique, par exemple au cours de son extrusion, ou encore en introduisant dans cette composition un système de vulcanisation (c'est-à-dire un système de réticulation à base de soufre).

Une réticulation pourra être également obtenue lors de la cuisson des bandages pneumatiques (ou plus généralement des articles en caoutchouc) que le renfort composite de l'invention est destiné à renforcer, grâce au propre système de réticulation présent dans les compositions de caoutchouc diénique constitutives de tels bandages (ou articles) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un bandage pneumatique. Il est avantageusement utilisable pour le renforcement de bandages pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 de l'invention a par exemple pour caractéristique essentielle qu'au moins une de ses armature de sommet ou de carcasse comporte un renfort composite selon l'invention. Selon un autre exemple de mode de réalisation possible de l'invention, ce sont par exemple les tringles 5 qui pourraient être constituées d'un renfort composite selon l'invention.

### EXEMPLES DE REALISATION DE L'INVENTION

### Essai 1 - Fabrication des renforts composites

On fabrique tout d'abord des renforts composites conformes à l'invention, de la manière suivante. Le fil de renforcement de départ est un câble d'acier (dit *"steel cord"*) pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par un mélange d'une part de polyamide 6 (« Ultramid B33 » de la société BASF ; Tf égale à environ 230°C), et d'autre part de SBS époxydé ("Epofriend AT501 de la société Daicel) et PPE ("Xyron S202" de la société Asahi Kasei), est réalisé sur une ligne d'extrusion-gainage par passage à travers une tête d'extrusion portée à une température de 230°C et comportant deux filières, une filière amont de diamètre 0,63 mm et une filière aval de diamètre 0,92 mm. Le mélange thermoplastique constitué du polyamide 6 (débit de pompe d'environ 42 g/min), du SBS époxydé (débit de pompe d'environ 12,6 g/min) et du PPE (débit de pompe d'environ 5,4 g/min) (selon des rapports pondéraux polyamide/ SBS époxydé/PPE de 79/21/9), est porté à une température de 230°C et recouvre ainsi le fil (préchauffé à environ 174°C par passage à travers un générateur HF) défilant à une vitesse de 60 m/min. En sortie de la tête de gainage, le renfort composite obtenu est immergé en continu dans un bac de refroidissement rempli d'eau à 5°C pour refroidir sa gaine thermoplastique, puis séché par une buse d'air.

Les températures de transition vitreuse, Tg₁, Tg₂ et Tg₃ des trois types de polymères utilisés ci-dessus sont respectivement égales à environ + 45°C, - 95°C et + 215°C (par exemple mesurées selon le mode opératoire qui suit : appareil DSC "822-2" de Mettler Toledo ; atmosphère Hélium ; échantillons préalablement portés de la température ambiante (20°C) à 100°C (20°C/min), puis refroidis rapidement jusqu'à -140°C, avant enregistrement final de la courbe de DSC de -140°C à +300°C à 20°C/min).

A l'issue de ce gainage, dans ces exemples, on soumet l'ensemble à un traitement thermique d'une durée d'environ 100 s, par passage à 3 m/min dans un four-tunnel, sous atmosphère ambiante (air), porté à une température de 270°C. On obtient ainsi des renforts composites conformes à l'invention (Renforts R-2 tels que schématisés à la figure 2), constitués du câble d'acier de départ gainé de sa couche de composition polymère thermoplastique (polyamide 6, PPE et élastomère SBS époxydé) dont les propriétés d'adhésion sont optimales.

Dans l'essai ci-dessus, pour déterminer les meilleures conditions opératoires du traitement thermique, on a réalisé préalablement un balayage en température de 160°C à 280°C, pour quatre durées de traitement (50 s, 100 s, 200 s et 400 s).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 100°C). On caractérise les niveaux d'adhésion en mesurant la force dite d'arrachage (notée Fₘₐₓ) pour arracher les renforts de l'éprouvette (moyenne sur 15 tractions).

On a constaté que le renfort composite de l'invention, malgré le fait qu'il soit dépourvu de colle RFL (ou toute autre colle), présentait une force d'arrachage Fₘₐₓ particulièrement élevée et inattendue, puisque égale à pratiquement 3 fois (plus précisément, augmentée de 170%) la force d'arrachage de référence mesurée sur un renfort composite témoin gainé simplement de polyamide 6 et encollé avec une colle conventionnelle RFL.

Dans les mêmes conditions, un renfort composite témoin gainé simplement de polyamide 6 (sans élastomère TPS ni PPE), mais dépourvu de colle RFL (ou toute autre colle), présentait une adhésion nulle au caoutchouc (force d'arrachage égale pratiquement à zéro).

En conclusion, le renfort composite de l'invention par son caractère auto-adhérent constitue une alternative particulièrement intéressante, compte tenu des très hauts niveaux d'adhésion obtenus, en particulier à température élevée (100°C ou plus), aux renforts composites de l'art antérieur gainés par une matière thermoplastique telle que polyamide ou polyester, nécessitant de manière connue l'emploi d'une colle du type RFL pour assurer leur adhésion ultérieure au caoutchouc.

## Revendications

1. Renfort composite comportant :
- un ou plusieurs fil(s) de renforcement ;
- ledit fil, individuellement chaque fil ou collectivement plusieurs fils, recouvert(s) d'une couche d'une composition polymère thermoplastique comportant au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

2. Renfort selon la revendication 1, dans lequel la température de transition vitreuse du polymère thermoplastique est supérieure à +20°C.

3. Renfort selon la revendication 1 ou 2, dans lequel la température de transition vitreuse de l'élastomère thermoplastique styrénique insaturé est inférieure à -20°C.

4. Renfort selon l'une quelconque des revendications 1 à 3, dans lequel l'écart de température de transition vitreuse entre le polymère thermoplastique et l'élastomère thermoplastique styrénique insaturé est supérieur à 60°C.

5. Renfort selon l'une quelconque des revendications 1 à 4, dans lequel le polymère thermoplastique est un polyamide aliphatique ou un polyester.

6. Renfort selon la revendication 5, dans lequel le polymère thermoplastique est un polyamide 6 ou un polyamide 11.

7. Renfort selon l'une quelconque des revendications 1 à 6, dans lequel l'élastomère thermoplastique est un copolymère comportant des blocs styrène et des blocs diène.

8. Renfort selon la revendication 7, dans lequel les blocs diène sont des blocs isoprène ou butadiène.

9. Renfort selon l'une quelconque des revendications 1 à 8, dans lequel le PPE a une température de transition vitreuse supérieure à 150°C, de préférence supérieure à 180°C.

10. Renfort selon l'une quelconque des revendications 1 à 9, dans lequel le PPE est le poly(2,6-diméthyl-1,4-phénylène-éther).

11. Renfort selon l'une quelconque des revendications 1 à 10, dans lequel l'élastomère thermoplastique comprend entre 5 et 50% en masse de styrène.

12. Renfort selon l'une quelconque des revendications 1 à 11, dans lequel l'épaisseur minimale de la couche est comprise entre 1 µ m et 2 mm.

13. Article ou produit semi-fini en caoutchouc comportant un renfort composite selon l'une quelconque des revendications 1 à 12.

14. Bandage pneumatique comportant un renfort composite selon l'une quelconque des revendications 1 à 12.

15. Procédé de fabrication d'un renfort composite selon l'une quelconque des revendications 1 à 12, **caractérisé en ce qu'**on gaine individuellement le fil ou chaque fil de renforcement, ou collectivement plusieurs fils de renforcement, par une couche de composition polymère thermoplastique comportant au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

## Patentansprüche

1. Verbundverstärkung, umfassend:
- einen oder mehrere Verstärkungsfäden;
- den Faden, jeden Faden einzeln bzw. mehrere Fäden zusammen, bedeckt von einer Schicht aus einer thermoplastischen Polymerzusammensetzung, die mindestens ein thermoplastisches Polymer, dessen Glasübergangstemperatur positiv ist, einen Poly(p-phenylenether) ("PPE"), und ein funktionalisiertes ungesättigtes thermoplastisches Styrolelastomer ("TPS"), dessen Glasübergangstemperatur negativ ist, umfasst, wobei das TPS-Elastomer aus Epoxid-, Carboxyl-, Anhydrid- oder Säureestergruppen ausgewählte funktionelle Gruppen trägt.

2. Verstärkung nach Anspruch 1, wobei die Glasübergangstemperatur des thermoplastischen Polymers größer als +20°C ist.

3. Verstärkung nach Anspruch 1 oder 2, wobei die Glasübergangstemperatur des ungesättigten thermoplastischen Styrolelastomers kleiner als -20°C ist.

4. Verstärkung nach einem der Ansprüche 1 bis 3, wobei die Glasübergangstemperaturdifferenz zwischen dem thermoplastischen Polymer und dem ungesättigten thermoplastischen Styrolelastomer größer als 60°C ist.

5. Verstärkung nach einem der Ansprüche 1 bis 4, wobei es sich bei dem thermoplastischen Polymer um ein aliphatisches Polyamid oder einen Polyester handelt.

6. Verstärkung nach Anspruch 5, wobei es sich bei dem thermoplastischen Polymer um ein Polyamid 6 oder ein Polyamid 11 handelt.

7. Verstärkung nach einem der Ansprüche 1 bis 6, wobei es sich bei dem thermoplastischen Elastomer um ein Copolymer mit Styrolblöcken und Dienblöcken handelt.

8. Verstärkung nach Anspruch 7, wobei es sich bei den Dienblöcken um Isopren- oder Butadienblöcke handelt.

9. Verstärkung nach einem der Ansprüche 1 bis 8, wobei der PPE eine Glasübergangstemperatur von mehr als 150°C und vorzugsweise mehr als 180°C aufweist.

10. Verstärkung nach einem der Ansprüche 1 bis 9, wobei es sich bei dem PPE um Poly(2,6-dimethyl-1,4-phenylenether) handelt.

11. Verstärkung nach einem der Ansprüche 1 bis 10, wobei das thermoplastische Elastomer zwischen 5 und 50 Gew.-% Styrol umfasst.

12. Verstärkung nach einem der Ansprüche 1 bis 11, wobei die Minimaldicke der Schicht zwischen 1 µm und 2 mm liegt.

13. Artikel oder Halbzeug aus Kautschuk, umfassend eine Verbundverstärkung nach einem der Ansprüche 1 bis 12.

14. Luftreifen, umfassend eine Verbundverstärkung nach einem der Ansprüche 1 bis 12.

15. Verfahren zur Herstellung einer Verbundverstärkung nach einem der Ansprüche 1 bis 12, **dadurch gekennzeichnet, dass** man den Verstärkungsfaden bzw. jeden Verstärkungsfaden einzeln oder mehrere Verstärkungsfäden zusammen mit einer Schicht aus einer thermoplastischen Polymerzusammensetzung, die mindestens ein thermoplastisches Polymer, dessen Glasübergangstemperatur positiv ist, einen Poly(p-phenylenether) ("PPE"), und ein ungesättigtes, funktionalisiertes thermoplastisches Styrolelastomer ("TPS"), dessen Glasübergangstemperatur negativ ist, umfasst, umhüllt, wobei das TPS-Elastomer aus Epoxid-, Carboxyl-, Anhydrid- oder Säureestergruppen ausgewählte funktionelle Gruppen trägt.

## Claims

1. Composite reinforcer comprising:
- one or more reinforcing thread(s);
- said thread, individually each thread or collectively several threads, covered by a layer of a thermoplastic polymer composition comprising at least one thermoplastic polymer, the glass transition temperature of which is positive, a poly(*p*-phenylene ether) (PPE) and a functionalized unsaturated thermoplastic styrene (TPS) elastomer, the glass transition temperature of which is negative, said TPS elastomer bearing functional groups selected from epoxide, carboxyl and acid anhydride or ester groups.

2. Reinforcer according to Claim 1, in which the glass transition temperature of the thermoplastic polymer is above +20°C.

3. Reinforcer according to Claim 1 or 2, in which the glass transition temperature of the unsaturated thermoplastic styrene elastomer is below -20°C.

4. Reinforcer according to any one of Claims 1 to 3, in which the difference in glass transition temperature between the thermoplastic polymer and the unsaturated thermoplastic styrene elastomer is greater than 60°C.

5. Reinforcer according to any one of Claims 1 to 4, in which the thermoplastic polymer is an aliphatic polyamide or a polyester.

6. Reinforcer according to Claim 5, in which the thermoplastic polymer is a polyamide 6 or a polyamide 11.

7. Reinforcer according to any one of Claims 1 to 6, in which the thermoplastic elastomer is a copolymer comprising styrene blocks and diene blocks.

8. Reinforcer according to Claim 7, in which the diene blocks are isoprene or butadiene blocks.

9. Reinforcer according to any one of Claims 1 to 8, in which the PPE has a glass transition temperature above 150°C, preferably above 180°C.

10. Reinforcer according to any one of Claims 1 to 9, in which the PPE is poly(2,6-dimethyl-1,4-phenylene ether).

11. Reinforcer according to any one of Claims 1 to 10, in which the thermoplastic elastomer comprises between 5% and 50% styrene by weight.

12. Reinforcer according to any one of Claims 1 to 11, in which the minimum thickness of the layer is between 1 µm and 2 mm.

13. Rubber article or semi-finished product comprising a composite reinforcer according to any one of Claims 1 to 12.

14. Pneumatic tyre comprising a composite reinforcer according to any one of Claims 1 to 12.

15. Process for manufacturing a composite reinforcer according to any one of Claims 1 to 12, **characterized in that** individually the reinforcing thread or each reinforcing thread, or collectively several reinforcing threads, is/are sheathed with a layer of thermoplastic polymer composition comprising at least one thermoplastic polymer, the glass transition temperature of which is positive, a poly(*p*-phenylene ether) (PPE) and a functionalized unsaturated thermoplastic styrene (TPS) elastomer, the glass transition temperature of which is negative, said TPS elastomer bearing functional groups selected from epoxide, carboxyl and acid anhydride or ester groups.
